Europäisches Patentamt

European Patent Office

Office européen des brevets

(11) Publication number: 0 356 004
A2

# EUROPEAN PATENT APPLICATION

(21) Application number: 89307487.2

(22) Date of filing: 24.07.89

(51) Int. Cl.⁴: **B60N 2/02**

(30) Priority: 19.08.88 US 233733

(43) Date of publication of application:
28.02.90 Bulletin 90/09

(84) Designated Contracting States:
BE DE ES FR GB IT

(71) Applicant: HOOVER UNIVERSAL INC
825, Victors Way
Ann Arbor Michigan 48104(US)

(72) Inventor: Witzke, Duane William
50 South Crestview
Adrian Michigan 49221(US)
Inventor: Williams, Lavon Earl
5296 Sand Creek
Adrian Michigan 49221(US)
Inventor: Selbert, Alan Joseph
3138 Gove Drive West
Tecumseh Michigan 49286(US)

(74) Representative: Williams, Trevor John
J.A. KEMP & CO. 14 South Square Gray's Inn
London WC1R 5EU(GB)

(54) Automotive seat assembly and method of installing same.

(57) A vehicle seat assembly providing for increased access to the seat assembly frame for attaching the seat assembly to the floor pan of a motor vehicle. The increased access is provided by pivotally mounting the seat cushion to the seat support frame at the rearward edge of the seat cushion. This allows the seat cushion to be pivoted upward to a position parallel to the seat back such that the support frame of the seat assembly is exposed. In this exposed position the seat assembly can be carried by a robot and placed into position in the vehicle and provides access for a robot to attach the support frame to the floor pan of a vehicle. Once the seat assembly is attached, the seat cushion is rotated downward into position on top of the support frame. An attaching means is provided on the seat cushion and support frame to hold the cushion in place.

FIG 1

## AUTOMOTIVE SEAT ASSEMBLY AND METHOD OF INSTALLING SAME

### BACKGROUND AND SUMMARY OF THE INVENTION

This invention relates to automotive seat assemblies and in particular to a seat assembly in which the labor required to install the seat into a motor vehicle is reduced.

As the automotive industry becomes increasingly more competitive, vehicle manufactures are searching for ways to decrease the cost of producing a motor vehicle. A major contributor to the production cost of a motor vehicle is the labor used to assemble the vehicle. Manufacturers are therefore constantly striving for methods of decreasing the labor required to assemble a motor vehicle.

One method of reducing the labor cost is to automate the assembly process by using robotics. One problem with the use of robots is manipulating the robot into small spaces required for some assembly operations. An example of a difficult operation for robots to perform is attaching a seat assembly to the vehicle floor plan. The difficulty lies not in the operation itself but in the limited space between the seat cushion and the floor pan in which the robot must perform the operation. By providing greater access to the seat frame and floor pan, this operation can easily be automated.

Even if robots are not used to automate an operation, the cost of manual labor can be reduced by providing easier access to the location of the operation for the person performing the task.

Accordingly, it is an object of this invention to provide a vehicle seat assembly which lends itself to automated assembly of the seat assembly into the vehicle body.

The seat assembly of this invention comprises three major components: 1) a support frame which is attached to the vehicle floor pan; 2) a seat back extending generally vertically from the rear of the support frame; and 3) a seat cushion which, in its operative position, is supported by and on the support frame in a generally horizontal position forward of the seat back.

To provide increased access to the support frame for attaching the frame to the floor pan, the seat cushion is movably mounted to the support frame at the rear of the seat cushion. During installation, the cushion is in an upright position in which the cushion is extending upward generally parallel to and immediately in front of the seat back. In this position, the support frame is accessible from above, allowing the support frame to be easily attached to the vehicle.

With the seat frame exposed in this manner, there is greater access for automated equipment, such as a robot, to grasp the seat assembly by the support frame and position the seat on the vehicle floor pan. Once positioned in the vehicle, a second robot can be used to attach the support frame to the floor pan by welding, riveting, bolting or the like.

After the seat assembly is attached to the vehicle floor pan, the seat cushion is then moved downward into its operative position extending generally horizontally forward of the seat back and supported on the support frame. An attaching structure provided on the seat cushion and the support frame, which is engagable upon downward movement of the seat cushion onto the support frame, holds the seat cushion in place upon the support frame.

Further objects, features and advantages of the invention will become apparent from a consideration of the following description and the appended claims when taken in connection with the accompanying drawings.

### BRIEF DESCRIPTION OF THE DRAWINGS

Figure 1 is a perspective view of a vehicle body during assembly in which a robot arm grasping the support frame of the seat assembly of this invention is positioning a seat assembly on the vehicle floor pan through a door opening;

Figure 2 is a perspective view, similar to Figure 1, in which a second robot arm is attaching the positioned seat assembly to the vehicle floor pan;

Figure 3 is a another perspective view similar to Figures 1 and 2 in which the seat cushion is being rotated downward into locking engagement with the support frame;

Figure 4 is a partially cut away perspective view showing a seat cushion frame and support frame prior to locking engagement of the seat cushion frame with the support frame;

Figure 5 is a cross sectional view of a seat cushion and support frame in which the seat cushion frame is in locking engagement with support frame.

### DETAILED DESCRIPTION OF THE INVENTION

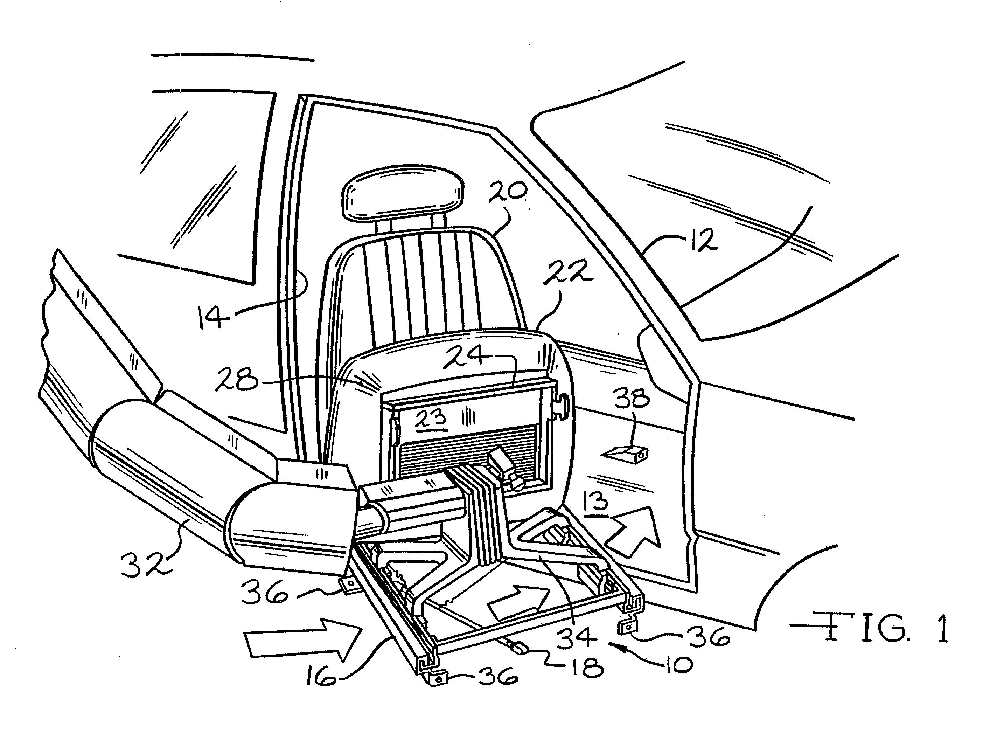

With reference to the drawings, a seat assembly 10 is illustrated in Figure 1 being positioned into a vehicle body 12 through a door opening 14, the door assembly for the door opening 14 having not yet been installed on the vehicle body 12.

The seat assembly 10 includes a support frame 16 which is to be attached to the floor pan 13 of the vehicle body 12. The support frame 16 is equipped with a conventional seat position adjusting mechanism having a lever 18 for actuation of the adjusting mechanism latch. Extending upward from the rear of the support frame 16 is a seat back assembly 20. The seat back assembly 20 includes a frame which is attached to the rear end of the support frame 16 in a conventional manner. Seat back 20 may be equipped with a reclining means for adjusting the vertical inclination of the seat back assembly.

As shown in Figure 1, the seat cushion 22 of seat assembly 10 is in a position extending vertically upward from the rear portion of the support frame. The seat cushion 22 includes a seat cushion frame 24. The rear end of the seat cushion frame 24 is pivotally attached to the support frame 16. The seat cushion 22 further includes a foam body 23 which partially encapsulates the seat cushion frame 24, and which is then covered by a seat cover upholstery 28.

A robot arm 32 is shown moving the seat assembly 10 into the interior of the vehicle body 12. The robot arm 32 is equipped with a tool 34 which is adapted to grasp the support frame 16 of the seat assembly for transporting the seat assembly.

The support frame 16 includes a plurality of mounting flanges 36 which are used for securing the support frame 16 to mounting bases 38 on the vehicle body floor pan.

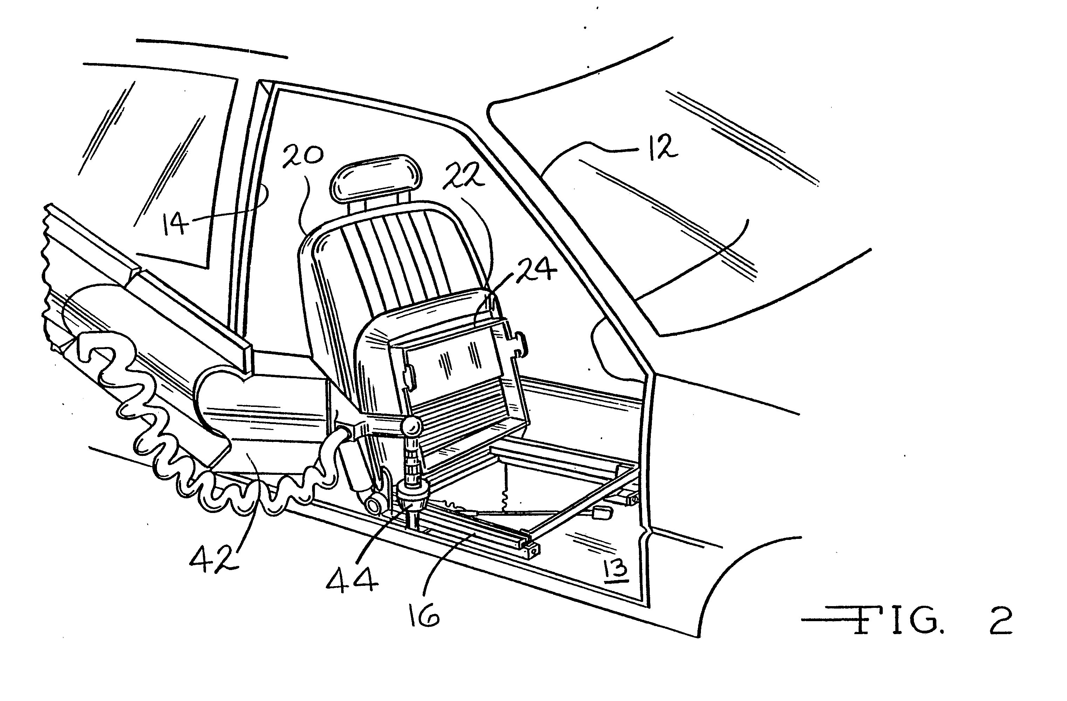

Figure 2 illustrates the seat assembly 10 in position on the floor pan 13 of vehicle body 12. A second robot arm 42 is equipped with a tool 44 which is used to attach the support frame 16 to the floor pan. The support frame can be attached in one of several methods such as welding, bolting, riveting and the like.

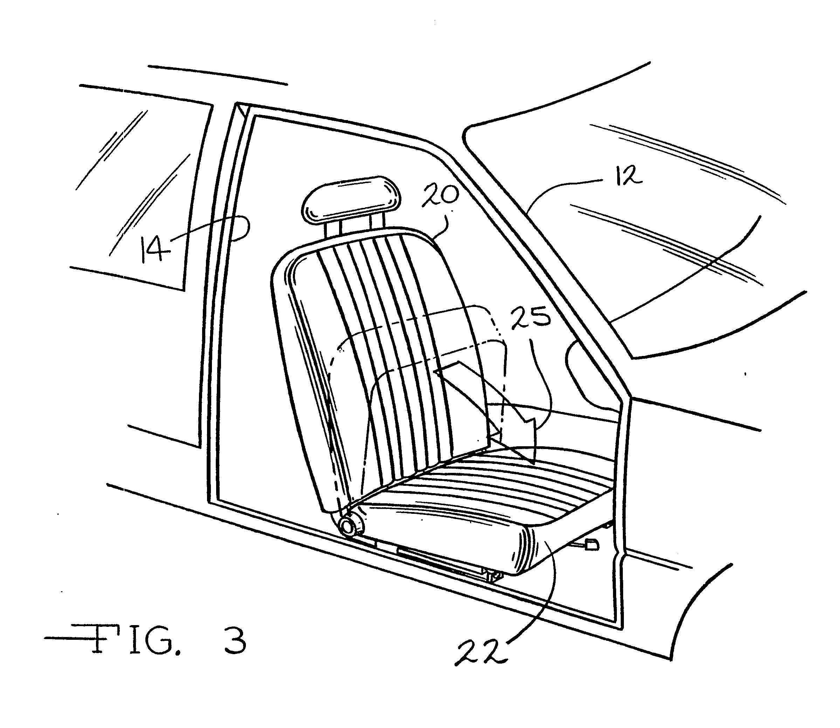

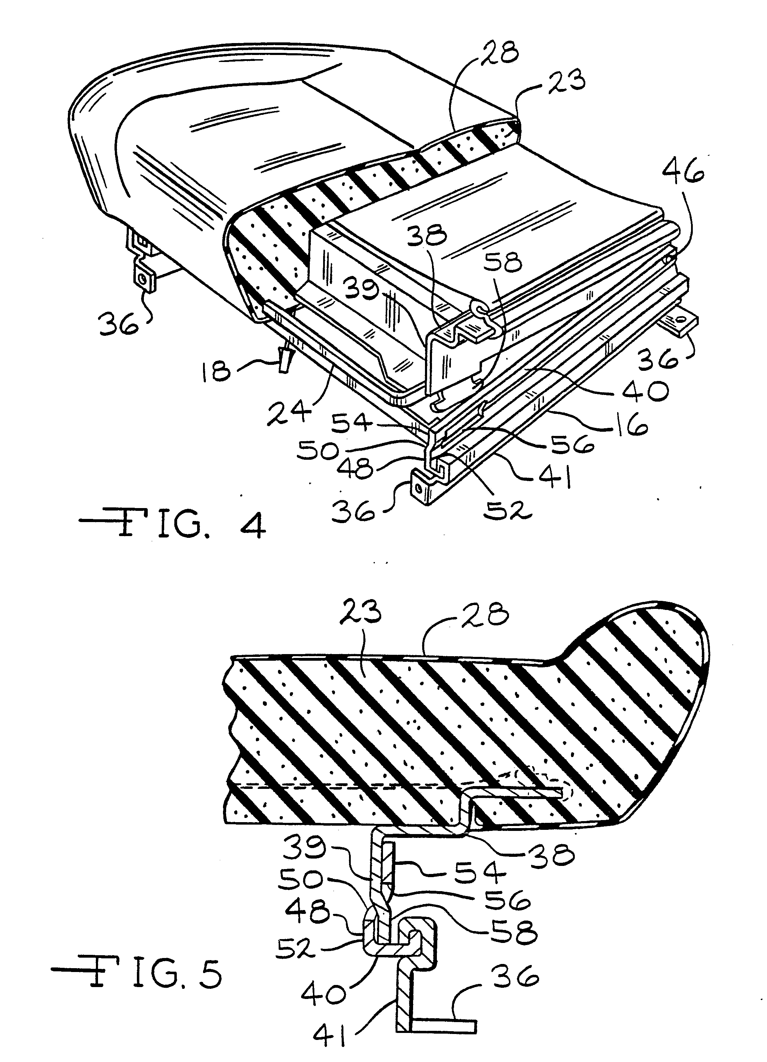

In Figure 3, the seat cushion assembly 22 is pivoted downward about its rearward end, as shown by arrows 25, from the installation position shown in phantom lines to its operative position extending generally horizontally from the seat back and secured to the support frame 16. The attachment of the seat cushion frame 24 to support frame 16 is illustrated in greater detail in Figures 4 and 5.

Figure 4 shows the seat cushion 22 and supporting frame 16. A portion of the upholstery and foam padding of the seat cushion is cut away to show details of the seat cushion frame 24. Seat cushion frame 24 includes a side rail member 38 which is hinged at its rearward end to a frame rail 40 of the support frame 16. A pin 46 pivotally connects the side rail 38 to the frame rail 40. Frame rail 40 is slidable mounted within floor mounting rail 41 to allow adjustment of the seat position. The frame rail 40 includes an upward extending vertical portion 48 having a bend 50 which divides the vertical portion into a lower vertical section 52 and an upper vertical section 54. Sections 54 and 52 lie in parallel planes with the plane of upper section 54 spaced laterally outwardly relative to the center of the seat from the plane of vertical section 52. A slotted aperture 56 is formed in the bend 50 near the forward end of frame rail 40.

The side rail 38 of seat cushion frame 24 includes a downwardly extending vertical member 39. Projecting downwardly from member 39 is a locking flange 58 which is bent laterally outwardly from vertical member 39 into a plane parallel to member 39. When the seat cushion assembly 22 is pivoted downward about its rearward end, the locking flange 58 projects through the aperture 56 such that the flange 58 is laterally outwardly of the vertical section 52 of the frame rail 40. The vertical member 39 is laterally inwardly of the upper vertical section 54 of frame rail 40. The relationship between the components is illustrated in Figure 5 which is a cross section of the seat cushion and support frame in the region of the aperture 56.

It is to be understood that the mechanism for locking the seat cushion frame to the support frame 16 need not be limited to the construction shown in Figures 4 and 5. Other latching mechanisms which are engagable upon downward motion of the seat cushion to the support frame can be utilized.

It should be further understood that for the purposes of this invention, the seat cushion does not need to be pivotally attached to the support frame at the rear of the seat cushion. The seat cushion can be attached to the support frame in any manner which allows movement of the cushion from an installation position providing access to the support frame from above to an operable position upon the support frame. The seat cushion can be provided as a separate component which is installed by lowering the seat cushion onto the support frame after the support frame is attached to the floor pan. In this case, the cushion and support frame would have attaching means at both the front and rear ends. To maximize the labor reducing benefit of this invention, the means for attaching the cushion to the frame should be operable in response to the motion of the seat cushion into the operative position.

It can be appreciated that the seat assembly of this invention lends itself to ease of assembly into the vehicle body. By having the seat cushion in a raised position, the support frame is accessible for first grasping by a robot arm to transport the seat assembly into the vehicle body and secondly for attaching the support frame to the floor pan. This seat assembly lends itself easily to automated assembly by use of robots.

It should be understood that efficiencies in the assembly process can be achieved without the use of robotics. The increased access to the support frame will also reduce the manual labor required making it easier for a person to attach the seat assembly to the floor pan.

It is to be understood that the invention is not limited to the exact construction and method illustrated and described above, but that various changes and modification may be made without departing from the spirit and scope of the invention as defined in the following claims.

## Claims

1. A seat assembly for a motor vehicle comprising:
a support frame for attaching the seat assembly to the vehicle,
a seat cushion movable from an installation position in which the frame is accessible from above for attaching said seat assembly to said seat vehicle to a generally horizontal operative position above said frame; and
coacting means on said cushion and said frame for securing the cushion in the operative position in response to movement of said cushion from said installation position to said operative position.

2. The seat assembly of claim 1 wherein said seat cushion is rotatably attached to said frame and movable in rotation from said installation position to said operative position.

3. The seat assembly of claim 2 wherein said frame and said cushion each have rear ends and said cushion is attached to said frame at the rear of said cushion and said frame.

4. The seat assembly of claim 3 further comprising:
a seat back extending upwardly from the rear end of said support frame;
said seat cushion extending upwardly from said frame in a plane generally parallel to and forward of said seat back.

5. The method of installing a seat assembly into a motor vehicle, the seat assembly having a support frame for attaching said seat assembly to said motor vehicle, a seat cushion movable from an installation position to an operative position and coacting means on said cushion and frame for securing the cushion in said operative position in response to movement of said cushion to said operative position, comprising the steps of:
positioning said seat assembly in said motor vehicle;
attaching said frame to said motor vehicle; and
moving said seat cushion from said installation position to said operative position whereby said coacting means secures said cushion in said operative position.

FIG. 1

FIG. 2

FIG. 3

EP 0 356 004 A2

EP 0 356 004 A2

FIG. 4

FIG. 5